# EUROPÄISCHE PATENTSCHRIFT

(11) **EP 2 604 891 B1**
(45) Veröffentlichungstag und Bekanntmachung des Hinweises auf die Patenterteilung: **07.09.2016**
(21) Anmeldenummer: 12007480.2
(22) Anmeldetag: 02.11.2012
(51) Int. Cl.: F16H 57/08

(54) **Planetengetriebe, insbesondere für eine Windkraftanlage, mit einer in einem Planetensteg ausgebildeten Schmierölzuführung zu Lagerstellen**
Planetary gear, in particular for a wind turbine, with a lubricating oil supply for bearings in the form of a planet web
Engrenage épicycloïdal, notamment pour une éolienne, avec une alimentation en lubrifiant dans une barre planétaire vers les points de pallier

(30) Priorität: 16.12.2011 DE 102011121434
(43) Veröffentlichungstag der Anmeldung: 19.06.2013
(73) Patentinhaber: ZF Friedrichshafen AG, 88046 Friedrichshafen (DE)
(72) Erfinder: Floren, Ansgar, 53757 Sankt Augustin (DE); Lehmann, Marco, 42275 Wuppertal (DE)

(56) Entgegenhaltungen:
- EP-A2- 1 431 575
- DE-A1-102009 037 548
- JP-U- H0 258 157
- JP-U- 63 049 053

## Beschreibung

Die Erfindung betrifft ein Planetengetriebe mit mindestens einer Planetenstufe, umfassend einen gegossenen Planetenträger mit mehreren entlang des Umfangs angeordneten Planetenbolzenbohrungen zur Aufnahme von Planetenbolzen für Planetenlager von Planetenrädern, deren Verzahnung zumindest mit der Verzahnung eines zentralen Sonnenrades zusammenwirkt, wobei im Planetenträger mehrere Kanalabschnitte zur Schmierölzuführung zu den Planetenlagern ausgebildet sind. Weiterhin betrifft die Erfindung auch eine Windkraftanlage, welche mit einem solchen Planetengetriebe ausgestattet ist.

Das Eirisatzgebiet der Erfindung erstreckt sich vornehmlich auf Großgetriebe, wie diese in der Windenergietechnik zum Einsatz kommen. Bei Windkraftanlagen werden Planetengetriebe höherer Leistung dazu verwendet, eine langsame Drehzahl des Rotors der Windkraftanlage ins Schnelle zu übersetzen, um einen Generator zur Erzeugung elektrischer Energie zu betreiben. Hierfür kommen meist mehrstufige Planetengetriebe zum Einsatz, welche auch leistungsverzweigt ausgeführt sein können. Insbesondere bei Planetengetrieben höherer Leistung ist eine zuverlässige Schmierung der Wälzlagerungen, insbesondere der Planetenlager sowie der Sonnenradwelle, sicherzustellen.

Die gattungsgemäße EP 1 431 575 A2 offenbart ein Planetengetriebe für eine Windkraftanlage, welche eine in einem Getriebegehäuse umlaufende Planetenstufe enthält. Die Planetenstufe besteht aus einem mit dem Rotor der Windkraftanlage verbundenen Planetenträger, welcher gemäß der zeichnerischen Darstellung offenbar als Gussteil ausgebildet ist und zwei durch Stege miteinander verbundene Seitenwangen aufweist. Am Planetenträger sind über als Wälzlager ausgebildete Planetenradlager mehrere Planetenräder gelagert, welche einerseits mit einem zentralen Sonnenrad und andererseits mit einem fest mit dem Getriebegehäuse verbundenen Hohlrad in Eingriff stehen.

In dem Getriebegehäuse ist ein für eine Schmierölzuführung zu den Planetenradlagern sowie dem zentralen Sonnenrad mit abgewinkelten Kanalabschnitten durchdrungener Einsatzring fest angeordnet. Die Schmierölzuführung des Einsatzrings steht an dem einen Ende mit einem durch die Wand des Getriebegehäuses hindurchgeführten und mit einer Ölförderpumpe in Verbindung stehenden Ölzulauf und am anderen Ende über eine Ringnut mit mehreren durch eine Seitenwange des Planetenträgers hindurchgeführte weitere Kanalabschnitte in Verbindung. Dabei sind durch die Planetenbolzen aller Planetenräder ebenfalls mehrfach abgewinkelte Kanalabschnitte angeordnet, welche mit den Kanalabschnitten an dem Planetenträger zur Bildung der Schmierölversorgung für die Planetenlager in Verbindung stehen.

Die in den Seitenwangen des gegossenen Planetenträgers eingebrachten Kanalabschnitte sind als Bohrungen ausgeführt und wegen des mehrfach abgewinkelten Verlaufs fertigungstechnisch recht aufwendig herzustellen.

Aus der US 2007/0049 448 A1 geht alternative technische Lösung zur Schmierölzuführung zu den Planetenlagern hervor, welche zur Vermeidung einer komplizierten Kanalführung keine im Planetenträger ausgebildeten Kanalabschnitte aufweisen. Das zur Schmierung der Planetenlager erforderliche Öl wird stattdessen über ein separates, neben dem Planetenträger angeordnetes ringförmiges Verteilungselement bereitgestellt, von dem aus axial gerichtete Ölleitungen das Öl direkt in die Planetenbolzen einleiten. Innerhalb der Planetenbolzen sind Kanalabschnitte eingebracht, welche das Öl in Radialrichtung an die Planetenlager weiterleiten.

Zwar wird mit dieser Lösung das aufwendige Bohren von mehrfach abgewinkelten Kanalabschnitten innerhalb des Planetenträgers vermieden; die separate und vom Planetenträger getrennte Ölzuführung erscheint jedoch technisch recht aufwendig und nimmt im Rahmen des Planetengetriebes recht viel Bauraum ein.

Es ist daher die Aufgabe der vorliegenden Erfindung ein gattungsgemäßes Planetengetriebe dahingehend weiter zu verbessern, dass die Schmierölzuführung zu den Planetenlagern und mindestens eines Sonnenlagers in fertigungstechnisch einfacher Weise zuverlässig sichergestellt werden kann.

Die Aufgabe wird ausgehend von einem Planetengetriebe gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zumindest ein radial zwischen der Planetenbolzenbohrung und einer Sonnenradwellenbohrung im Planetenträger verlaufender erster Kanalabschnitt durch ein im Planetenträger eingegossenes Metallrohr hergestellt ist.

Der Vorteil der erfindungsgemäßen Lösung liegt insbesondere darin, dass an dieser für Bohrwerkzeuge schwer zugänglichen Stelle des Planetenträgers ein notwendiger Kanalabschnitt der Schmierölführung durch ein während des Urformens des Planetenträgers in das Urformwerkzeug eingelegtes vorgefertigtes Metallrohr hergestellt werden kann. Prinzipiell lassen sich alle in Gussbauteilen von Planetengetrieben enthaltenen Schmierölbohrungen durch erfindungsgegenständliche eingegossene Metallrohre ersetzen. Ferner können derart eingegossene Metallrohre neben dem Schmieren auch zum Kühlen, Erwärmen oder Hindurchführen anderer Leitungen durch das Gussbauteil verwendet werden.

Vorzugsweise besteht das eingegossene Metallrohr aus einem Stahlmaterial und die äußere Mantelfläche des Metallrohrs ist vorzugsweise stoffschlüssig mit dem Gussmaterial des Planetenträgers verbunden. Hierdurch wird eine sichere Fixierung des Metallrohrs im Bauteil erzielt. Hierbei sollte insbesondere die Rohrdicke derart stark gewählt sein, dass sich das Metallrohr beim Urformprozess mit dem Gussmaterial des Planetenträgers verbindet, nicht jedoch derart schmilzt, dass sich die äußeren geometrischen Abmessungen des Metallrohres signifikant ändern. Der Stahlwerkstoff des Metallrohres sowie dessen Oberflächengüte sollten derart gewählt sein, dass sich das Metallrohr mit dem Gussmaterial sicher stoffschlüssig verbindet.

Gemäß einer bevorzugten Ausführungsform des erfindungsgegenständlich ausgebildeten Planetenträgers wird vorgeschlagen, dass ein sich an den radialen ersten durch das eingegossene Metallrohr gebildeten Kanalabschnitt ein zweiter Kanalabschnitt anschließt, welcher der Schmierölzuführung dienend im Planetenbolzen ausgebildet ist. Somit bildet der aus dem Metallrohr bestehende erste Kanalabschnitt eine Brückenleitung zwischen dem Planetenlager und dem Bereich des Sonnenrades.

Diese beiden Schmierstellen werden vorzugsweise über einen sich am zweiten Kanalabschnitt anschließenden dritten Kanalabschnitt gespeist, welcher wieder weiter radial außen liegend im Planetenträger ausgebildet ist. Dieser dritte Kanalabschnitt tritt vorzugsweise in Axialrichtung an einer Frontseite des Planetenträgers aus. An dieser Stelle lässt sich die Schmierölführung durch Anschluss eines Ölzuführungsschlauchs von zugänglicher Stelle her speisen.

Der dritte Kanalabschnitt, welcher im Planetenträger ausgebildet ist, kann durchaus als Bohrung ausgeführt werden, da der Bereich des dritten Kanalabschnitts der Schmierölzuführung von außen her durch Bohrwerkzeuge zugänglich ist.

Gemäß einer bevorzugten Ausführungsform des Planetenträgers ist dieser von einem außenradial hieran angeformten hohlzylinderförmigen Gehäuse umgeben. Das Gehäuse dient zur Abdichtung sowie zur Übertragung des Drehmoments.

Da ein solches hohlzylinderförmiges Gehäuse gewöhnlich als separates Bauteil ausgebildet ist und über eine Trennfuge mit dem hierin eingesetzten Planetenträger per Schraubverbindung fixiert wird, ermöglicht die einteilige Ausbildung durch Funktionsintegration in einem einzigen Bauteil einen Wegfall der Trennfuge, so dass an dieser Stelle keine besonderen Abdichtungsmaßnahmen für die die Trennfuge ansonsten passierende Schmierölzuführung zu treffen sind.

Weitere die Erfindung verbessernden Maßnahmen werden nachstehend gemeinsam mit der Beschreibung einer bevorzugten Ausführungsbeispiels der Erfindung anhand der Figuren näher dargestellt. Es zeigt:
- Figur 1: eine schematische Vorderansicht eines Planetengetriebes,
- Figur 2: einen Längsschnitt durch einen Planetenträger des Planetengetriebes mit hieran angeformten hohlzylinderförmigen Gehäuse.

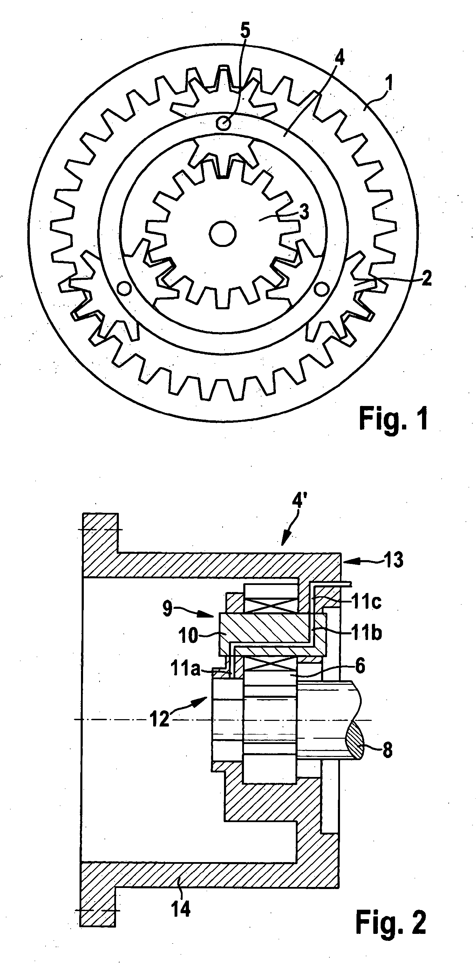

Gemäß Figur 1 besteht die schematisch dargestellte gewöhnliche Planetenstufe eines - nicht weiter gezeigten - Planetengetriebes im Wesentlichen aus einem äußeren Hohlrad 1 mit einer Innenverzahnung, welche mit der Außenverzahnung mehrere Planetenräder 2 (exemplarisch) in Eingriff steht. Die Planetenräder 2 kämmen wiederum mit einem zentralen Sonnenrad 3. Bei diesem Planetengetriebe ist das Hohlrad 1 ortsfest angeordnet. Der Antrieb erfolgt über einen die Planetenräder 2 haltenden Planetenträger 4 und der Abtrieb erfolgt über das Sonnenrad 3. Die Planetenräder 2 sind über je zugeordnete und als Wälzlager ausgeführte Planetenlager 5 drehend am Planetenträger 4 befestigt. Anstelle eines Hohlrades 1 können Planetenräder auch lediglich mit einem zentralen Sonnenrad korrespondieren.

Bei einem in Figur 2 zu diesem Zwecke vorgesehenen Planetenträger 4' ist ein schematisch dargestelltes Sonnenrad 6 über eine einstückig hiermit ausgebildete Sonnenradwelle 8 im Planetenträger 4 über den Zahneingriff mit den Planetenrädern 2 drehend gelagert.

Der Planetenträger 4' weist weiterhin mehrere entlang des Umfangs angeordnete Planetenbolzenbohrungen 9 zur Aufnahme von Planetenbolzen 10 für die Planetenlager 5 der Planetenräder 2 auf. Die Verzahnung der Planetenräder 2 wirkt mit der Verzahnung des zentralen Sonnenrads 6 zusammen.

Im Planetenträger 4' sind außerdem mehrere Kanalabschnitte 11a bis 11c zur Schmierölzuführung zu den Planetenlagern 5 und dem Bereich des Sonnenrades 6 ausgebildet.

Radial zwischen der Planetenbolzenbohrung 9 und einer Sonnenradwellenbohrung 12 im Planetenträger 4 verläuft der erste Kanalabschnitt 11 a der Schmierölzuführung, welcher speziell als ein im Planetenträger 4 eingegossenes Metallrohr ausgebildet ist. Das eingegossene Metallrohr besteht aus einem Stahlmaterial, wogegen der Planetenträger 4 aus Kugelgraphitguss besteht.

Ein sich an dem ersten Kanalabschnitt 11 a im Planetenträger 4' anschließender zweiter Kanalabschnitt 11 b der Schmierölzuführung verläuft durch den Planetenbolzen 10. Der im Planetenbolzen 10 ausgebildete zweite Kanalabschnitt 11 b ist mehrfach abgewinkelt ausgeführt, um einen axialen Versatz der Schmierölzuführung zu realisieren.

Ein sich an den zweiten Kanalabschnitt 11b anschließender dritter Kanalabschnitt 11c der Schmierölführung ist dagegen wieder im Planetenträger 4' ausgebildet. Der dritte Kanalabschnitt 11c tritt in axialer Richtung gesehen an einer Frontseite 13 des Planetenträgers 4' aus, um diesen Bereich über eine - nicht weiter dargestellte - Ölzuführungsleitung zu speisen. Während der erste Kanalabschnitt 11a der Schmierölzuführung durch ein im Planetenträger 4' eingegossenes Metallrohr ausgebildet ist, ist bei diesem Ausführungsbeispiel der dritte Kanalabschnitt 11 c der Schmierölführung als Bohrung ausgeführt.

Der die drehenden Getriebeteile aufnehmende Abschnitt des Planetenträgers 4' ist von einem außenradial hieran angeformten hohlzylinderförmigen Gehäuse 14 umgeben. Mit dem hohlzylinderförmigen Gehäuse 14 wird der Planetenträger 4' samt den drehenden Getriebeteilen innerhalb eines - nicht weiter dargestellten - Planetengetriebes als Planetenstufe montiert.

### Bezugszeichenliste

- 1: Hohlrad
- 2: Planetenräder
- 3: Sonnenrad
- 4: Planetenträger
- 5: Planetenlager
- 6: Sonnenrad
- 8: Sonnenradwelle
- 9: Planetenbolzenbohrung
- 10: Planetenbolzen
- 11: Kanalabschnitt
- 12: Sonnenradwellenbohrung
- 13: Frontseite
- 14: Gehäuse

## Patentansprüche

1. Planetengetriebe mit mindestens einer Planetenstufe, umfassend einen gegossenen Planetenträger (4) mit mehreren entlang des Umfangs angeordneten Planetenbolzenbohrungen (9) zur Aufnahme von Planetenbolzen (10) für Planetenlager (5) von Planetenrädern (2), deren Verzahnung zumindest mit der Verzahnung eines zentralen Sonnenrads (6) zusammenwirkt, wobei im Planetenträger (4) mehrere Kanalabschnitte (11a, 11 b, 11 c) zur Schmierölzuführung zumindest zu den Planetenlagern (5) ausgebildet sind, **dadurch gekennzeichnet, dass** zumindest ein radial zwischen der Planetenbolzenbohrung (9) und einer das Sonnenradlager (7a; 7b) aufnehmenden Sonnenradwellenbohrung (12) im Planetenträger (4) verlaufender erster Kanalabschnitt (11a) durch ein im Planetenträger (4) eingegossenes Metallrohr besteht.

2. Planetengetriebe nach Anspruch 1,
**dadurch gekennzeichnet, dass** das den ersten Kanalabschnitt (11a) bildende eingegossene Metallrohr aus einem Stahlmaterial besteht.

3. Planetengetriebe nach Anspruch 2,
**dadurch gekennzeichnet, dass** die äußere Mantelfläche des aus dem Stahlmaterial bestehenden Metallrohrs stoffschlüssig mit dem Gussmaterial des Planetenträgers (4') verbunden ist.

4. Planetengetriebe nach Anspruch 1,
**dadurch gekennzeichnet, dass** ein sich an den radialen ersten Kanalabschnitt (11 a) anschließender zweiter Kanalabschnitt (11b) der Schmierölzuführung im Planetenbolzen (10) ausgebildet ist.

5. Planetengetriebe nach Anspruch 4,
**dadurch gekennzeichnet, dass** der im Planetenbolzen (10) ausgebildete zweite Kanalabschnitt (11b) mehrfach abgewinkelt ausgeführt ist, um einen axialen Versatz der Schmierölzuführung zu realisieren.

6. Planetengetriebe nach Anspruch 4 oder 5,
**dadurch gekennzeichnet, dass** ein sich an den zweiten Kanalabschnitt (11 b) anschließender dritter Kanalabschnitt (11c) der Schmierölzuführung im Planetenträger (4') ausgebildet ist.

7. Planetengetriebe nach Anspruch 6,
**dadurch gekennzeichnet, dass** der dritte Kanalabschnitt (11c) in Axialrichtung an einer Frontseite (13) des Planetenträgers (4') austritt.

8. Planetengetriebe nach Anspruch 1,
**dadurch gekennzeichnet, dass** der dritte Kanalabschnitt (11c) im Planetenträger (4') als eine Bohrung ausgeführt ist.

9. Planetengetriebe nach einem der vorstehenden Ansprüche,
**dadurch gekennzeichnet, dass** der Planetenträger (4') von einem außenradial hieran angeformten hohlzylinderförmigen Gehäuse (14) umgeben ist.

10. Windkraftanlage mit einem Planetengetriebe nach einem der vorstehenden Ansprüche.

## Claims

1. Planetary gear mechanism having at least one planetary stage, comprising a cast planetary carrier (4) with a plurality of planet journal bores (9) which are arranged along the circumference for receiving planet journals (10) for planetary bearings (5) of planetary gears (2), the toothing of which interacts at least with the toothing of a central sun gear (6), a plurality of duct sections (11a, 11b, 11c) for feeding lubricating oil at least to the planetary bearings (5) being configured in the planetary carrier (4), **characterized in that** at least one first duct section (11a) which runs in the planetary carrier (4) radially between the planetary journal bore (9) and a sun gear shaft bore (12) which receives the sun gear bearing (7a; 7b) consists of a metal pipe which is cast into the planetary carrier (4).

2. Planetary gear mechanism according to Claim 1, **characterized in that** the cast metal pipe which forms the first duct section (11a) consists of a steel material.

3. Planetary gear mechanism according to Claim 2, **characterized in that** the outer circumferential face of the metal pipe which consists of the steel material is connected in an integrally joined manner to the cast material of the planetary carrier (4').

4. Planetary gear mechanism according to Claim 1, **characterized in that** a second duct section (11b), adjoining the radial first duct section (11a), of the lubricating oil feed line is configured in the planetary journal (10).

5. Planetary gear mechanism according to Claim 4, **characterized in that** the second duct section (11b) which is configured in the planetary journal (10) is configured so as to be angled away multiple times, in order to realise an axial offset of the lubricating oil feed line.

6. Planetary gear mechanism according to Claim 4 or 5, **characterized in that** a third duct section (11c), adjoining the second duct section (11b), of the lubricating oil feed line is configured in the planetary carrier (4').

7. Planetary gear mechanism according to Claim 6, **characterized in that** the third duct section (11c) exits in the axial direction on a front side (13) of the planetary carrier (4').

8. Planetary gear mechanism according to Claim 1, **characterized in that** the third duct section (11c) is configured in the planetary carrier (4') as a bore.

9. Planetary gear mechanism according to one of the preceding claims, **characterized in that** the planetary carrier (4') is surrounded by a hollow-cylindrical housing (14) which is integrally formed thereon radially on the outside.

10. Wind power plant having a planetary gear mechanism according to one of the preceding claims.

## Revendications

1. Engrenage épicycloïdal, comprenant au moins un étage planétaire, comprenant un porte-satellites coulé (4) avec plusieurs alésages d'axes de satellites (9) disposés le long de la périphérie pour recevoir des axes de satellites (10) pour des paliers planétaires (5) de satellites (2), dont la denture coopère au moins avec la denture d'une roue solaire centrale (6), plusieurs portions de canal (11a, 11b, 11c) pour l'alimentation en huile de lubrification au moins aux paliers planétaires (5) étant réalisées dans le porte-satellites (4), **caractérisé en ce qu'**au moins une première portion de canal (11a) s'étendant dans le porte-satellites (4)radialement entre l'alésage d'axe de satellite (9) et un alésage d'arbre de roue solaire (12) recevant le palier de roue solaire (7a ; 7b) se compose d'un tube métallique coulé dans le porte-satellites (4).

2. Engrenage épicycloïdal selon la revendication 1, **caractérisé en ce que** le tube métallique coulé formant la première portion de canal (11a) se compose d'un matériau à base d'acier.

3. Engrenage épicycloïdal selon la revendication 2, **caractérisé en ce que** la surface d'enveloppe extérieure du tube métallique constitué du matériau à base d'acier est connectée par engagement par liaison de matière au matériau de coulée du porte-satellites (4').

4. Engrenage épicycloïdal selon la revendication 1, **caractérisé en ce qu'**une deuxième portion de canal (11b) pour l'alimentation en huile de lubrification, se raccordant à la première portion de canal radiale (11a), est réalisée dans l'axe de satellite (10).

5. Engrenage épicycloïdal selon la revendication 4, **caractérisé en ce que** la deuxième portion de canal (11b) réalisée dans l'axe de satellite (10) est réalisée avec plusieurs coudes afin de réaliser un décalage axial de l'alimentation en huile de lubrification.

6. Engrenage épicycloïdal selon la revendication 4 ou 5, **caractérisé en ce qu'**une troisième portion de canal (11c) pour l'alimentation en huile de lubrification, se raccordant à la deuxième portion de canal (11b), est réalisée dans le porte-satellites (4').

7. Engrenage épicycloïdal selon la revendication 6, **caractérisé en ce que** la troisième portion de canal (11c) sort dans la direction axiale au niveau d'un côté frontal (13) du porte-satellites (4').

8. Engrenage épicycloïdal selon la revendication 1, **caractérisé en ce que** la troisième portion de canal (11c) est réalisée dans le porte-satellites (4') sous forme d'alésage.

9. Engrenage épicycloïdal selon l'une quelconque des revendications précédentes, **caractérisé en ce que** le porte-satellites (4') est entouré par un boîtier (14) de forme cylindrique creuse façonné sur celui-ci radialement à l'extérieur.

10. Éolienne comprenant un engrenage épicycloïdal selon l'une quelconque des revendications précédentes.
